# EUROPÄISCHE PATENTSCHRIFT

(11) **EP 2 825 427 B1**
(45) Veröffentlichungstag und Bekanntmachung des Hinweises auf die Patenterteilung: **09.11.2016**
(21) Anmeldenummer: 13709195.5
(22) Anmeldetag: 13.03.2013
(51) Int. Cl.: B60T 1/087, B60T 10/02

(54) **VERFAHREN ZUM EINSTELLEN DES BREMSMOMENTES EINES HYDRODYNAMISCHEN RETARDERS**
METHOD TO ADJUST THE BRAKING MOMENT OF A HYDRODYNAMIC RETARDER
PROCÉDÉ POUR L'ADJUSTEMENT DU COUPLE DE FREINAGE D'UN RETARDATEUR HYDRODYNAMIQUE

(30) Priorität: 14.03.2012 DE 102012004985
(43) Veröffentlichungstag der Anmeldung: 21.01.2015
(73) Patentinhaber: Voith Patent GmbH, 89522 Heidenheim (DE)
(72) Erfinder: SCHERER, Roland, 74564 Crailsheim (DE)
(74) Vertreter: Dr. Weitzel & Partner
(86) Internationale Anmeldenummer: PCT/EP2013/055101
(87) Internationale Veröffentlichungsnummer: WO 2013/135754

(56) Entgegenhaltungen:
- DE-A1- 4 113 539
- DE-A1-102005 046 626
- DE-C1- 19 848 546

## Beschreibung

Die vorliegende Erfindung betrifft ein Verfahren zum Einstellen des Bremsmomentes eines hydrodynamischen Retarders in einem Fahrzeug, insbesondere Lastkraftwagens, im Einzelnen gemäß dem Oberbegriff von Anspruch 1, sowie ein Verfahren zum Einstellen oder Halten einer konstanten Geschwindigkeit eines solchen Fahrzeugs, im Einzelnen gemäß dem Oberbegriff von Anspruch 9. Die Erfindung ist jedoch auch bei anderen Fahrzeugen, beispielsweise Schienenfahrzeugen, anwendbar.

Aus der Patentschrift DE 198 48 546 C1 ist bekannt, den Arbeitsraum eines hydrodynamischen Retarders aus einem Vorratsraum zu befüllen, wobei die Geschwindigkeit der Befüllung in Abhängigkeit eines Steuerdruckes eingestellt wird. Für den Steuerdruck wird ein bestimmter Steuerdruckverlauf nach Erfassen eines Retardereinschaltbefehls erzeugt, der einen sogenannten Überschwinger enthält. Das bedeutet, dass für einen kurzen Zeitraum ein höherer Druck als der dem gewünschten einzustellenden Bremsmoment des Retarders zugeordnete Nenndruck als Steuerdruck erzeugt wird. Gemäß der DE 198 48 546 C1 wird der Überschwinger im Steuerdruckverlauf in Abhängigkeit des Vorratsluftdruckes, aus welchem der Steuerdruck erzeugt wird, der Retarderöltemperatur, der Retarderdrehzahl oder der Fahrzeuggeschwindigkeit, des ABS-Signals, der Achslast, des Bremse-Pause-Intervalls oder des Bremsmittelstandes, der Fahrzeugquerbeschleunigung, der Außentemperatur, der Geschwindigkeit des Betätigungselementes, mit welchem der Retarder angefordert wird, oder der Beschleunigung der Sollwertvorgabe eingestellt. WO 00/24621 A1 und US 6 601 925 B1 umfassen eine Übersetzung der in DE 198 48 546 C1 dargestellten Lehre, ohne dieser trotz abweichender Begriffe inhaltlich etwas hinzuzufügen.

Die genannte Patentschrift zeigt Maßnahmen auf, welche die Einschaltzeit eines hydrodynamischen Retarders deutlich reduzieren können, ohne die Gefahr des Auslösens des Antiblockiersystems des Fahrzeugs oder anderer unerwünschter "Nebenwirkungen".

Als Nachteil beim Stand der Technik ergibt sich in Situationen, in denen das Fahrzeug im Gefälle zunächst ungebremst fährt und daher beschleunigt, dass beim Einschalten des hydrodynamischen Retarders, um eine vorgegebene, insbesondere konstante Geschwindigkeit nicht zu überschreiten beziehungsweise einzustellen, ein Überschwinger in der Fahrzeuggeschwindigkeit in Abhängigkeit des Gefälles und möglicherweise weiteren Randbedingungen mehr oder minder stark auftritt. Besonders problematisch ist, wenn sich eine Ist-Geschwindigkeit des Fahrzeugs von mehreren Stundenkilometern über der Soll-Geschwindigkeit in dem Überschwinger ergibt, mit der Folge, dass der hydrodynamische Retarder gegebenenfalls bis auf sein Maximalbremsmoment eingesteuert wird, um die Geschwindigkeitsüberhöhung wieder abzubauen. Hier kann die Situation entstehen, dass sich während der länger andauernden stärkeren Bremsung, insbesondere mit dem Maximalbremsmoment, eine Kühlmittelüberhitzung ergibt, welche wiederum je nach Sicherheitssystem zu einer automatischen Rücknahme des Retarderbremsmomentes führt. Somit ergeben sich verschiedene und für den Fahrer unkomfortable Geschwindigkeitsverläufe beim Abbremsen des Fahrzeugs.

Der vorliegenden Erfindung liegt die Aufgabe zugrunde, ein Verfahren zum Einstellen des Bremsmomentes eines hydrodynamischen Retarders in einem Fahrzeug anzugeben, das die genannten Nachteile des Standes der Technik vermeidet. Ferner soll ein Verfahren zum Einstellen oder Halten einer konstanten Geschwindigkeit eines Fahrzeugs bei einer Bergabfahrt durch Einstellen des Bremsmomentes eines hydrodynamischen Retarders angegeben werden.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben. In Anspruch 9 ist ein erfindungsgemäßes Verfahren zum Einstellen oder Halten einer konstanten Geschwindigkeit des Fahrzeugs dargestellt.

Erfindungsgemäß wird beim Erfassen eines Einschaltbefehls für den hydrodynamischen Retarder, wobei der Einschaltbefehl beispielsweise durch eine Geschwindigkeitsregelanlage oder Abstandsregelanlage des Fahrzeugs erzeugt wird, ein Zuschalten des hydrodynamischen Retarders und ein Erzeugen eines vorgegebenen Bremsmomentes mit diesem bewirkt, wobei die Zeitdauer, bis das vorgegebene Bremsmoment durch den Retarder bereitgestellt wird und/oder die Höhe des Bremsmomentes des Retarders über dem Zeitverlauf bis zum Erreichen des vorgegebenen Bremsmomentes verändert werden kann, das heißt veränderbar einstellbar ist.

Erfindungsgemäß wird ferner die Längsbeschleunigung des Fahrzeugs erfasst oder berechnet und die Zeitdauer, bis das vorgegebene Bremsmoment durch den Retarder bereitgestellt wird und/oder die Höhe des Bremsmomentes des Retarders über den zeitlichen Verlauf bis zum Erreichen des vorgegebenen Bremsmomentes in Abhängigkeit der Längsbeschleunigung des Fahrzeugs eingestellt.

Durch das erfindungsgemäße Einstellen des Bremsmomentes des hydrodynamischen Retarders kann nun das Fahrzeug bei einer Bergabfahrt mit einer konstanten Geschwindigkeit gefahren werden, das heißt eine solche Geschwindigkeit kann entweder eingestellt oder gehalten werden, wobei das Fahrzeug insbesondere vor dem Einschalten des hydrodynamischen Retarders ungebremst bergab fährt.

Das vorgegebene Bremsmoment kann beispielsweise ein insbesondere konstantes Bremsmoment sein, das einer von mehreren Schaltstufen zugeordnet ist, welche durch den Fahrer durch eine Eingabevorrichtung manuell einstellbar sind. Das vorgegebene Bremsmoment kann auch ein insbesondere konstantes Bremsmoment sein, das einer von mehreren Schaltstufen zugeordnet ist, die durch ein Fahrzeugassistenzsystem, beispielsweise die Geschwindigkeitsregelanlage oder Abstandsregelanlage des Fahrzeugs einstellbar sind. Jedoch kommen auch nicht konstante Bremsmomente bzw. vorgegebene Bremsmomentverläufe als vorgegebenes Bremsmoment in Betracht.

Die Längsbeschleunigung des Fahrzeugs kann beispielsweise kontinuierlich oder in vorgegebenen Intervallen erfasst werden. Alternativ wird sie nur beim Erfassen beziehungsweise nach dem Erfassen eines Einschaltbefehls für den hydrodynamischen Retarder erfasst. Anstelle einer Erfassung kommt auch eine Berechnung beispielsweise aus der Fahrzeuggeschwindigkeit in Betracht. So kann beispielsweise der Anstiegsgradient der Ist-Geschwindigkeit aus der erfassten oder berechneten Fahrzeuggeschwindigkeit berechnet werden.

Gemäß einer vorteilhaften Ausgestaltung des erfindungsgemäßen Verfahrens wird bei vergleichsweise größerer Längsbeschleunigung des Fahrzeugs, die erfasst oder berechnet wurde, die Zeitdauer, bis das vorgegebene Bremsmoment durch den Retarder bereitgestellt wird, verkürzt oder ein vergleichsweise größeres Bremsmoment wird über dem zeitlichen Verlauf bis zum Erreichen des vorgegebenen Bremsmomentes eingestellt als bei vergleichsweise kleinerer Längsbeschleunigung des Fahrzeugs.

Zusätzlich zur Längsbeschleunigung des Fahrzeugs kann die Geschwindigkeit des Fahrzeugs erfasst oder berechnet werden und ein Einschaltbefehl für den hydrodynamischen Retarder bei Erreichen oder oberhalb einer vorgegebenen Sollgeschwindigkeit erzeugt werden, oder, um Überschwinger weitgehend zu vermeiden, bei Erreichen einer Geschwindigkeit des Fahrzeugs, die kleiner ist als die Sollgeschwindigkeit und einen vorgegebenen Abstand unterhalb der Sollgeschwindigkeit liegt.

Das Bremsmoment des Retarders kann gemäß einer erfindungsgemäßen Ausführungsform durch Aufbringen eines Steuerdruckes auf einen Arbeitsmediumvorrat oder Arbeitsmediumkreislauf eingestellt werden. Aus dem Arbeitsmediumvorrat und/oder aus dem Arbeitsmediumkreislauf wird ein zwischen zwei Schaufelrädern des Retarders gebildeter Arbeitsraum des Retarders zur hydrodynamischen Leistungsübertragung mit Arbeitsmedium befüllt. Der Steuerdruckverlauf über der Zeit wird nun nach Erfassen des Einschaltbefehls in Abhängigkeit der Längsbeschleunigung des Fahrzeugs eingestellt.

Alternativ wird das Bremsmoment des Retarders durch Aufbringen des Steuerdruckes auf ein Drosselventil eingestellt, welches in Strömungsrichtung des Arbeitsmediums hinter dem Arbeitsraum des Retarders vorgesehen ist. Auch bei dieser Ausführungsform kann der Steuerdruckverlauf über der Zeit nach Erfassen des Einschaltbefehls in Abhängigkeit der Längsbeschleunigung des Fahrzeugs eingestellt werden.

Besonders günstig ist es, wenn mit zunehmender Fahrzeuglängsbeschleunigung ein größerer Überschwinger nach Erfassen des Einschaltbefehls zu Beginn des Bremsvorgangs im Steuerdruckverlauf eingestellt wird. Somit wird ein sanftes Einsetzen der Retarderbremswirkung bei einer geringen Längsbeschleunigung des Fahrzeugs und ein starkes Einsetzen des Retarders bei großer Längsbeschleunigung des Kraftfahrzeugs erreicht.

Der Retarder beziehungsweise der zugehörige Arbeitsmediumkreislauf kann mit Öl, Wasser oder einem Wassergemisch betrieben werden. Grundsätzlich kommen auch andere Arbeitsmedien in Betracht. Der Steuerdruck wird in der Regel über ein Druckluftsystem mit Luft als Steuermedium zur Verfügung gestellt. Auch hier kommen andere Ausführungsformen in Betracht.

Die Erfindung soll nachfolgend anhand eines Ausführungsbeispiels exemplarisch beschrieben werden.

Es zeigen:
- Figur 1: zwei verschiedene Bremsmomentverläufe eines hydrodynamischen Retarders beim Einschalten desselben, die in Abhängigkeit der erfassten oder berechneten Längsbeschleunigung des Fahrzeugs eingestellt werden können;
- Figur 2: Beispiele für mögliche Steuerdruckverläufe, um zu den Bremsmomentverläufen gemäß Figur 1 zu gelangen.

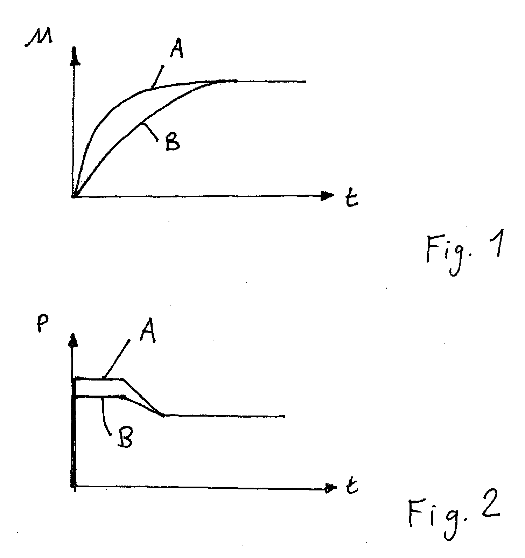

In der Figur 1 sind zwei verschiedene mögliche einstellbare Bremsmomentverläufe eines hydrodynamischen Retarders über der Zeit dargestellt, beginnend im Zeitpunkt Null, in dem ein Einschaltbefehl für den hydrodynamischen Retarder erfasst wird. Gemäß der Kurve A wird im zeitlichen Verlauf bis zum Erreichen des vorgegebenen Bremsmomentes ein vergleichsweise höheres Bremsmoment als bei der Kurve B eingestellt. Ferner wir das vorgegebene Bremsmoment schneller erreicht. Alternativ unterscheiden sich die Bremsmomentverläufe (hier entsprechend der Kurven A und B) nur in der Höhe und das vorgegebene Bremsmoment, das hier als konstantes Bremsmoment dargestellt ist, wird nach Ablauf derselben Zeitspanne nach Erfassen des Einschaltbefehls erreicht.

In der Figur 2 ist beispielhaft ein möglicher Steuerdruckverlauf dargestellt, um den Bremsmomentverlauf A gemäß der Figur 1 zu erreichen sowie den Bremsmomentverlauf B. Um den Bremsmomentverlauf A der Figur 1 zu erreichen, ist der Überschwinger im Steuerdruckverlauf über der Zeit größer als im Fall des Bremsmomentverlaufes B. Auch könnte vorgesehen sein, dass nur für den Bremsmomentverlauf A überhaupt ein Überschwinger im Steuerdruckverlauf eingestellt wird, im Fall B jedoch nicht.

Der Verlauf der Kurve A kann beispielsweise bei einer erfassten oder berechneten größeren Längsbeschleunigung des Fahrzeugs eingestellt werden als der Verlauf der Kurve B.

## Patentansprüche

1. Verfahren zum Einstellen des Bremsmomentes eines hydrodynamischen Retarders in einem Fahrzeug, insbesondere Lastkraftwagen, mit den folgenden Schritten:
1.1 beim Erfassen eines Einschaltbefehls für den hydrodynamischen Retarder Zuschalten des hydrodynamischen Retarders und Erzeugen eines vorgegebenen Bremsmomentes, wobei die Zeitdauer bis das vorgegebene Bremsmoment durch den Retarder bereitgestellt wird und/oder die Höhe des Bremsmomentes des Retarders über dem zeitlichen Verlauf bis zum Erreichen des vorgegebenen Bremsmomentes, veränderbar einstellbar ist; **dadurch gekennzeichnet, dass**
1.2 die Längsbeschleunigung des Fahrzeugs erfasst oder berechnet wird und die Zeitdauer bis das vorgegebene Bremsmoment durch den Retarder bereitgestellt wird und/oder die Höhe des Bremsmomentes des Retarders über dem zeitlichen Verlauf bis zum Erreichen des vorgegebenen Bremsmomentes in Abhängigkeit der Längsbeschleunigung des Fahrzeugs eingestellt wird.

2. Verfahren gemäß Anspruch 1, **dadurch gekennzeichnet, dass** bei vergleichsweise größerer Längsbeschleunigung des Fahrzeugs die Zeitdauer verkürzt und/oder ein vergleichsweise größeres Bremsmoment über dem zeitlichen Verlauf eingestellt wird, als bei vergleichsweise kleinerer Längsbeschleunigung des Fahrzeugs.

3. Verfahren gemäß einem der Ansprüche 1 oder 2, **dadurch gekennzeichnet, dass** die Längsbeschleunigung des Fahrzeugs fortlaufend erfasst oder berechnet wird.

4. Verfahren gemäß einem der Ansprüche 1 bis 3, **dadurch gekennzeichnet, dass** zusätzlich die Geschwindigkeit des Fahrzeugs erfasst oder berechnet wird und ein Einschaltbefehl für den hydrodynamischen Retarder bei Erreichen oder oberhalb einer vorgegebenen Sollgeschwindigkeit oder bei Erreichen einer Geschwindigkeit des Fahrzeugs mit einem vorgegebenen Abstand unterhalb der Sollgeschwindigkeit erzeugt wird.

5. Verfahren gemäß einem der Ansprüche 1 bis 4, **dadurch gekennzeichnet, dass** das Bremsmoment des Retarders durch Aufbringen eines Steuerdruckes auf einen Arbeitsmediumvorrat oder Arbeitsmediumkreislauf, aus welchem ein zwischen zwei Schaufelrädern des Retarders gebildeter Arbeitsraum des Retarders zur hydrodynamischen Leistungsübertragung mit Arbeitsmedium befüllt wird, eingestellt wird und der Steuerdruckverlauf über der Zeit nach Erfassen des Einschaltbefehls in Abhängigkeit der Längsbeschleunigung eingestellt wird.

6. Verfahren gemäß einem der Ansprüche 1 bis 4, **dadurch gekennzeichnet, dass** das Bremsmoment des Retarders durch Aufbringen eines Steuerdruckes auf ein einem mit Arbeitsmedium befüllten oder befüllbaren Arbeitsraum des Retarders, der zwischen zwei Schaufelrädern des Retarders gebildet wird, in einem Arbeitsmediumkreislauf in Strömungsrichtung des Arbeitsmediums nachgeordneten Drosselventil eingestellt wird und der Steuerdruckverlauf über der Zeit nach Erfassen des Einschaltbefehls in Abhängigkeit der Längsbeschleunigung eingestellt wird.

7. Verfahren gemäß einem der Ansprüche 5 oder 6, **dadurch gekennzeichnet, dass** mit zunehmender Fahrzeuglängsbeschleunigung ein größer werdender Überschwinger nach Erfassen des Einschaltbefehls zu Beginn des Bremsvorgangs im Steuerdruckverlauf eingestellt wird.

8. Verfahren gemäß einem der Ansprüche 1 bis 7, **dadurch gekennzeichnet, dass** der Retarder mit dem Arbeitsmedium Öl, Wasser oder einem Wassergemisch betrieben wird.

9. Verfahren zum Einstellen oder Halten einer konstanten Geschwindigkeit eines Fahrzeugs, insbesondere Lastkraftwagens, bei einer Bergabfahrt, **dadurch gekennzeichnet, dass** das Fahrzeug durch Einschalten eines hydrodynamischen Retarders und Einstellen eines Bremsmomentes mit diesem gebremst wird, wobei das Bremsmoment gemäß einem der Ansprüche 1 bis 8 eingestellt wird.

10. Verfahren gemäß Anspruch 9, **dadurch gekennzeichnet, dass** das Fahrzeug vor dem Einschalten des hydrodynamischen Retarders ungebremst gefahren wird.

## Claims

1. A method for setting the braking torque of a hydrodynamic retarder in a vehicle, especially truck, with the following steps:
1.1 activation of the hydrodynamic retarder and generation of a predetermined braking torque upon detecting an activation command for the hydrodynamic retarder, wherein the duration until the predetermined braking torque is provided by the retarder and/or the level of the braking torque of the retarder is variably adjustable over the time progression until reaching the predetermined braking torque,
**characterized in that**
1.2 the longitudinal acceleration of the vehicle will be detected or calculated, and the duration until the predetermined braking torque is provided by the retarder and/or the level of the braking torque of the retarder over the time progression until reaching the predetermined braking torque is set depending on the longitudinal acceleration of the vehicle.

2. A method according to claim 1, **characterized in that** in the case of a comparatively higher longitudinal acceleration of the vehicle the duration will be reduced and/or a comparatively higher braking torque over the temporal progression will be set than in the case of a comparatively lower longitudinal acceleration of the vehicle.

3. A method according to one of the claims 1 or 2, **characterized in that** the longitudinal acceleration of the vehicle will be detected or calculated continuously.

4. A method according to one of the claims 1 to 3, **characterized in that** the speed of the vehicle will be detected or calculated additionally, and an activation command for the hydrodynamic retarder will be generated upon reaching or above a predetermined setpoint speed, or upon reaching a speed of the vehicle at a predetermined distance beneath the setpoint speed.

5. A method according to one of the claims 1 to 4, **characterized in that** the braking torque of the retarder is set by applying a control pressure to a working medium store or a working medium circuit, from which a working space of the retarder formed between two blade wheels of the retarder is filled with working medium for hydrodynamic power transmission, and the control pressure progression over time is set after the detection of the activation command depending on the longitudinal acceleration.

6. A method according to one of the claims 1 to 4, **characterized in that** the braking torque of the retarder is set by applying a control pressure to a working space of the retarder, which is or can be filled with a working medium and which is formed between two blade wheels of the retarder, in a working medium circuit in a throttle valve arranged downstream in the direction of flow of the working medium, and the control pressure progression over time is set after detecting the activation command depending on the longitudinal acceleration.

7. A method according to one of the claims 5 or 6, **characterized in that** with rising longitudinal acceleration of the vehicle an increasingly rising overshoot will be set in the control pressure progression after detecting the activation command at the beginning of the braking process.

8. A method according to one of the claims 1 to 7, **characterized in that** the retarder is operated with a working medium of oil, water or a water mixture.

9. A method for setting or holding a constant speed of a vehicle, especially a truck, during downhill travel, **characterized in that** by activating a hydrodynamic retarder and setting a braking torque the vehicle is braked thereby, wherein the braking torque is set according to one of the claims 1 to 8.

10. A method according to claim 9, **characterized in that** the vehicle is driven in a non-braked manner prior to activating the hydrodynamic retarder.

## Revendications

1. Procédé pour régler le moment de freinage d'un retardateur hydrodynamique dans un véhicule, en particulier un poids-lourd, comprenant les étapes suivantes :
1.1 lors de la détection d'un ordre de démarrage pour le retardateur hydrodynamique, activation du retardateur hydrodynamiques et génération d'un moment de freinage prédéterminé, le temps écoulé avant que le moment de freinage prédéterminé soit délivré par le retardateur et/ou la grandeur du moment de freinage du retardateur sur l'évolution dans le temps avant que soit atteint le moment de freinage prédéterminé pouvant être modifiés ;
**caractérisé en ce que**
1.2 l'accélération longitudinale du véhicule est mesurée ou calculée et le temps écoulé avant que le moment de freinage prédéterminé soit délivré par le retardateur et/ou la grandeur du moment de freinage du retardateur sur l'évolution dans le temps avant que soit atteint le moment de freinage prédéterminé sont réglés en fonction de l'accélération longitudinale du véhicule.

2. Procédé selon la revendication 1, **caractérisé en ce que** lorsque l'accélération longitudinale du véhicule est comparativement plus forte, le temps écoulé est raccourci et/ou un moment de freinage sur l'évolution dans le temps comparativement plus important est réglé que lorsque l'accélération longitudinale du véhicule est comparativement plus faible.

3. Procédé selon l'une des revendications 1 ou 2, **caractérisé en ce que** l'accélération longitudinale du véhicule est mesurée ou calculée de façon continue.

4. Procédé selon l'une des revendications 1 à 3, **caractérisé en ce que** la vitesse du véhicule est en outre mesurée ou calculée et un ordre de démarrage est généré pour le retardateur hydrodynamique lorsqu'une vitesse de consigne prédéterminée est atteinte ou dépassée ou lorsqu'une vitesse véhicule inférieure d'une différence prédéterminée à la valeur de consigne est atteinte.

5. Procédé selon l'une des revendications 1 à 4, **caractérisé en ce que** le moment de freinage du retardateur est produit par l'application d'une pression de commande sur une réserve de fluide de travail ou un circuit de fluide de travail, à partir duquel un espace de travail du retardateur formé entre deux roues à aubes du retardateur est rempli de fluide de travail en vue de la transmission hydrodynamique de puissance, et l'évolution de la pression de commande dans le temps est réglée après la détection de l'ordre de démarrage en fonction de l'accélération longitudinale.

6. Procédé selon l'une des revendications 1 à 4, **caractérisé en ce que** le moment de freinage du retardateur est produit par l'application d'une pression de commande sur une soupape d'étranglement montée dans un circuit de fluide de travail en aval, dans le sens d'écoulement du fluide de travail, d'un espace de travail du retardateur rempli ou pouvant être rempli de fluide de travail qui est formé entre deux roues à aubes du retardateur, et l'évolution de la pression de commande dans le temps après la détection de l'ordre de démarrage est réglée en fonction de l'accélération longitudinale.

7. Procédé selon l'une des revendications 5 ou 6, **caractérisé en ce que** lorsque l'accélération longitudinale du véhicule augmente, une amplitude de suroscillation croissante est réglée dans l'évolution de la pression de commande après la détection de l'ordre de démarrage au début de l'opération de freinage.

8. Procédé selon l'une des revendications 1 à 7, **caractérisé en ce que** le retardateur fonctionne avec comme fluide de travail de l'huile, de l'eau ou un mélange aqueux.

9. Procédé pour régler ou maintenir une vitesse constante d'un véhicule, en particulier d'un poids-lourd, lors d'un trajet en descente, **caractérisé en ce que** le véhicule est freiné par l'activation d'un retardateur hydrodynamique et l'établissement d'un moment de freinage avec celui-ci, le moment de freinage étant réglé selon l'une des revendications 1 à 8.

10. Procédé selon la revendication 9, **caractérisé en ce que** le véhicule est conduit sans freinage avant l'activation du retardateur hydrodynamique.
